Europäisches Patentamt

(19) European Patent Office

Office européen des brevets

(11) EP 0 478 369 B1

## (12) EUROPEAN PATENT SPECIFICATION

(45) Date of publication and mention
of the grant of the patent:
**18.06.1997 Bulletin 1997/25**

(51) Int. Cl.⁶: **B41J 2/355**, B41J 2/515,
B41J 2/525

(21) Application number: **91308861.3**

(22) Date of filing: **27.09.1991**

(54) **Line thermal printer**

Zeilenwärmedrucker

Imprimante thermique travaillant ligne par ligne

(84) Designated Contracting States:
**DE FR GB**

(30) Priority: **28.09.1990 JP 262728/90
28.09.1990 JP 262727/90**

(43) Date of publication of application:
**01.04.1992 Bulletin 1992/14**

(73) Proprietor: **FUJITSU LIMITED
Kawasaki-shi, Kanagawa 211 (JP)**

(72) Inventors:
• **Watanabe, Sumio,
c/o Fujitsu Limited
Kawasaki-shi, Kanagawa 211 (JP)**
• **Yamaji, Shuko,
c/o Fujitsu Limited
Kawasaki-shi, Kanagawa 211 (JP)**
• **Maeda, Katsuhiro,
c/o Fujitsu Limited
Kawasaki-shi, Kanagawa 211 (JP)**

(74) Representative: **Fane, Christopher Robin King et
al
Haseltine Lake & Co.,
Imperial House,
15-19 Kingsway
London WC2B 6UD (GB)**

(56) References cited:
**EP-A- 0 254 454**          **US-A- 4 389 935**
**US-A- 4 814 790**

• **PATENT ABSTRACTS OF JAPAN vol. 12, no. 190
(M-704)(3037) 3 June 1988& JP-A-62 299 350
(FUJITSU LTD) 26 December 1987**
• **PATENT ABSTRACTS OF JAPAN vol. 15, no. 290
(M-1139)23 July 1991 & JP-A-3 104 660 (FUJITSU
LTD) 1 MAY 1991**

## Description

The present invention relates to line thermal printers, for example a line thermal printer suitable to be used with a handy terminal or connected to compact portable equipment driven by batteries.

A number of thermal printers have been developed which print by electrically heating a print head, in a manner corresponding to letters and graphics, in contact with thermosensitive paper which becomes coloured when heat is applied thereto.

Such thermal printers, especially those driven by batteries, may be roughly classified into 2 groups,

(1) serial thermal printers used in low voltage systems (about 5 V), and
(2) line thermal printers used in high voltage systems (about 12 V).

Generally, thermal printers working with low voltages have low print speeds, while thermal printers having high print speeds use high voltages.

Compact portable equipment, for example handy terminals, cannot print at high speed when driven by a battery having a voltage in the range from 4.5 to 6.5 V, or by a 5 V low voltage single power source.

There exist a variety of thermosensitive papers for use with thermal printers, for example red/black paper which changes colour depending on the temperature applied, i.e. depending on the print energy supplied, 2-ply paper which requires greater print energy to produce colouring than is required to print on 1-ply thermosensitive paper, and the more common 1-ply paper.

Consequently, in order to obtain favourable print quality for a variety of thermosensitive papers, a line thermal printer that can change the print energy per unit area, depending upon the thermosensitive papers being used, is desirable.

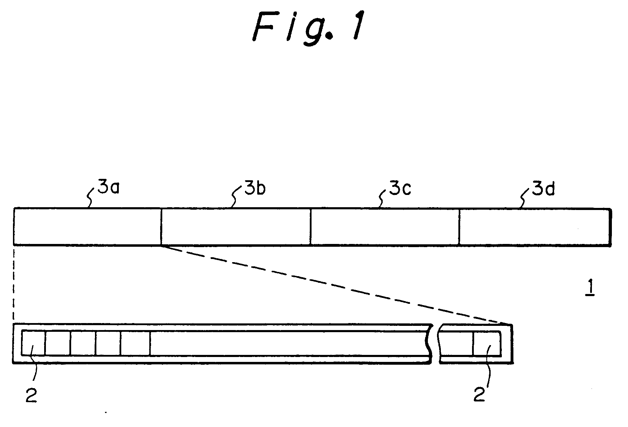

United States Patent Nos. 4,814,790 and 4,638,329 disclose a line thermal printer for printing on thermosensitive paper, comprising electrical heating means connected through control means to a print head having a line of heating elements arranged for contacting such paper and energizable selectively by the said heating means to produce printing marks on the paper, the said control means being operable to supply electrical energy from the said heating means to different predetermined groups of the said heating elements at different respective times in the course of a printing operation, and Fig. 1 of the drawings accompanying the present description shows schematically a print head 1 of such a line thermal printer.

The print head 1 of this line thermal printer consists of 320 heating elements 2, divided into 4 print blocks, 3a to 3d, each of 80 heating elements 2.

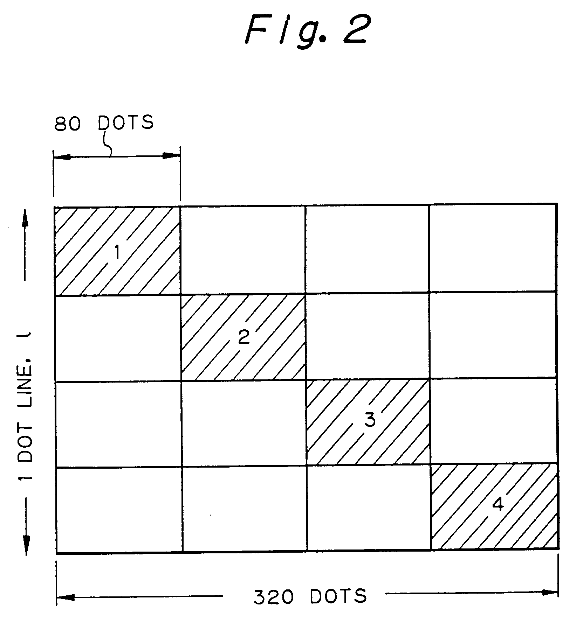

To print on thermosensitive paper, heating elements 2 in the print block 3a, for example, selected in accordance with aligned data portions to be printed, are energised electrically for a predetermined time with a high voltage of around 12 V. Marks are thereby made on the thermosensitive paper in the region corresponding to the position of the print block 3a, shown by the shaded area 1 in Fig. 2, and the paper is then fed up a small distance.

Thereafter, heating elements 2 in the print blocks 3b, 3c and 3d in succession are energized in a similar way, so that marks are made on the thermosensitive paper at positions corresponding to the respective printer blocks 3b, 3c and 3d, (shaded areas (2), (3) and (4) respectively) and thus printing of 1 dot line is completed.

However, this type of line thermal printer generally uses a high supply voltage of around 12V to energize the heating elements 2 for the predetermined time. If printing is attempted with a low supply voltage, for example from 4.8 V to 5.0 V, favourable print quality or print density cannot usually be obtained and printing cannot usually be effected at high speed, because the print energy supplied is small. Thus, with compact portable equipment, for example a handy terminal, which needs to be driven by a low supply voltage, or by a single power source of around 4.8 V, sufficient print energy cannot be produced.

To obtain the required heating power with a low supply voltage, the heating element resistance may be made lower and the heating element current value may be made larger. In general, the energy needed for printing is expressed by the following formula:

$$\varepsilon = \frac{(V - Vs)^2}{R} \cdot t/S$$

where

$\varepsilon$ = Energy per unit area;
$V$ = Applied voltage;
$Vs$ = Saturation voltage;
$R$ = Heating element resistance;
$t$ = Pulse width;
and $S$ = Heating element area.

To increase the print energy,

(1) the saturation voltage, $Vs$, may be reduced,
(2) the heating element resistance value, $R$, may be reduced,
(3) the heating element area, $S$, may be reduced, or
(4) the pulse width $t$ may be increased.

However, there is a lower limit to the heating element resistance, $R$, due to the material used for the print head. Also, if the heating element resistance $R$ decreases, the current $i$ flowing to the heating element 2 increases, thereby increasing the saturation voltage $Vs$. The saturation voltage $Vs$ is associated with wasted energy which has no effect on the print density.

The current flowing to a single heating element is

given by:

$$i = \frac{(V - Vs)}{R}$$

Therefore the total current flowing to n heating elements in the print head 1 is given by:

$$\sum_n i = \sum_n \frac{(V - Vs)}{R}$$

The saturation voltage Vs is dependent upon the current i and can be expressed approximately in the form:

$$Vs = ai + b$$

(In practice, the voltage Vs generally becomes non-linear because of the saturation characteristics of a switching transistor).

If the current i increases, the saturation voltage Vs also increases, thereby tending to reduce the print energy $\varepsilon$ by reducing the value of (V - Vs).

Additionally, if a battery is used, internal impedance can cause a drop in supply voltage, since the supply voltage V depends upon the load current i and, hence, may fluctuate. There may also be a loss due to a common conductor inside the print head. The optimum range of heating element resistance R may be determined independently.

Enlarging the pulse width t generally results in a longer print cycle, thereby lowering the print speed.

Decreasing the pulse width would generally result in a shorter print cycle, thereby increasing the print speed. However, the print energy $\varepsilon$ would then decrease.

According to one aspect of the present invention, there is provided a line thermal printer, for printing on thermosensitive paper, comprising electrical heating means connected through control means to a print head having a line of heating elements arranged for contacting such paper and energizable selectively by the said heating means to produce printing marks on the paper, the said control means being operable to supply electrical energy from the said heating means to different predetermined groups of the said heating elements at different respective times in the course of a printing operation, characterised in that the printer has a mode of operation in which the control means supply electrical energy to at least one of the said groups to effect printing of marks pertaining to one line of data character portions to be printed and simultaneously supply electrical energy to at least one other of the said groups to effect printing of marks pertaining to a last preceding line of the data character portions to be printed.

An embodiment of such a printer may have a plurality of different printing modes, and may be structured so that the said control means can change the number of the said predetermined groups to be heated simultaneously and the pattern of heating elements to be heated on the basis of the said data in the said groups. Such a printer may also have print percentage judgement means for detecting the number of heating elements to be heated, compared with the total number of heating elements in the said groups, so that the said groups may be subdivided into smaller groups if the said number of heating elements to be heated exceeds a preset value. Thus, if the number of heating elements, in the print head to be heated by the heating means, exceeds the preset number, the print heads are further subdivided and heated by the heating means, with a view to reducing possible printing troubles due to reduction in voltage resulting from internal impendence and internal heat loss in the head caused by a common conductor provided inside the head.

According to a second aspect of the present invention there is provided a method of operating a line thermal printer, for printing on thermosensitive paper, comprising electrical heating means connected through control means to a print head having a line of heating elements arranged for contacting such paper and energizable selectively by the said heating means to produce printing marks on the paper, the said control means being operable to supply electrical energy from the said heating means to different predetermined groups of the said heating elements at different respective times in the course of a printing operation, characterised in that the control means supply electrical energy to at least one of the said groups to effect printing of marks pertaining to one line of data character portions to be printed and simultaneously supply electrical energy to at least one other of the said groups to effect printing of marks pertaining to a last preceding line of the data character portions to be printed.

In embodiments of the present invention, the heating elements in a plurality of groups may be simultaneously heated by the heating means so as to effect printing on the thermosensitive paper at a reasonably high speed, even with a low supply voltage, for example in the range from 4.8V to 5.0V.

Further, in an embodiment of the present invention, the energisation of the heating elements in the print head is controlled so that the printing speed is kept constant by energization control means, whilst the energisation cycles are determined in accordance with different printing modes appropriate to different respective types of thermosensitive paper requiring different print energies per unit area.

Reference will now be made, by way of example, to the accompanying drawings, in which:

Fig 1, discussed above, is a schematic diagram showing a print head in a previously-considered thermal printer;

Fig. 2, discussed above, is a diagram showing electrification (energisation) timing in a previously-considered thermal printer;

Fig. 3 is a schematic diagram showing print head control means used in an embodiment of the present invention;

Figs. 4(a) and (b) are diagrams illustrating relationships between print data and actual print in a high speed printing mode;

Fig. 5 is a chart illustrating electrification timing of a high speed printing mode;

FIG. 6 is a diagram showing relationships between print data and actual print in a high quality printing mode;

Fig. 7 is a diagram showing electrification timing of a high quality printing mode;

Fig. 8 is a diagram showing relationships between print data and actual print in a reduction printing mode;

Fig. 9 is a diagram showing relationships between print data and actual print in a double-density printing mode;

Fig. 10 shows an equivalent circuit of part of a print head;

Fig 11 is a graph showing the relationship between print period and print density;

Fig 12 is a table relating print percentage to print speed;

Fig. 13 illustrates schematically the operation of a drive control system of a line thermal printer according to an embodiment of the present invention;

Fig. 14 illustrates data processing used in the drive control of a line thermal printer operating in accordance with an embodiment of the present invention;

Fig. 15 is a diagram illustrating a second example of data processing;

Fig. 16 is a diagram illustrating a method of improving print quality in embodiments of the present invention;

Fig. 17 is a diagram illustrating the operation of a previously-considered line thermal printer;

Fig. 18 illustrates operation of a line thermal printer in accordance with an embodiment of the present invention;

Fig. 19 is a diagram showing a comparison of burn systems used respectively in a previously-considered printer and a printer operable in accordance with an embodiment of the present invention;

Fig. 20 is a diagram illustrating electrification timing in an embodiment of the present invention;

Fig. 21 is a diagram illustrating electrification timing used in a 1-ply printing mode in an embodiment of the present invention,

Fig. 22 is a diagram illustrating electrification timing used in a 2-ply printing mode in an embodiment of the present invention; and

Fig. 23 illustrates schematically the control of a line thermal printer in accordance with an embodiment of the present invention.

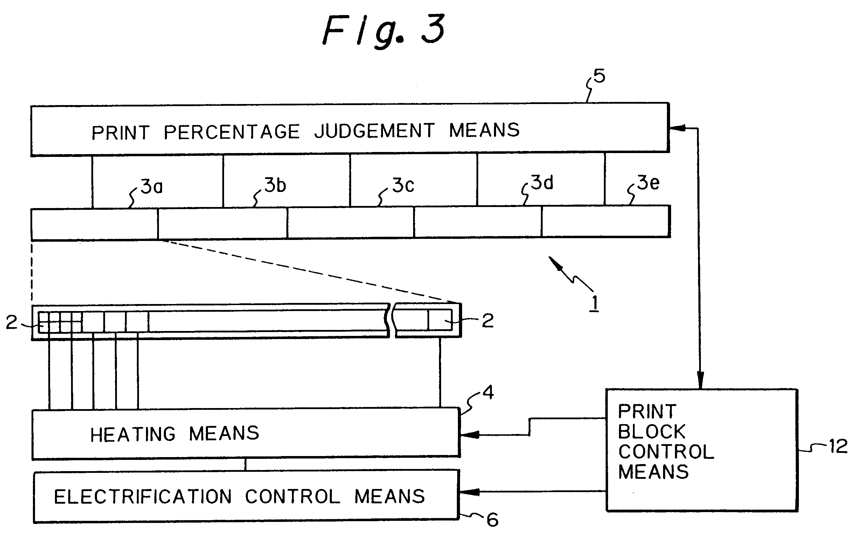

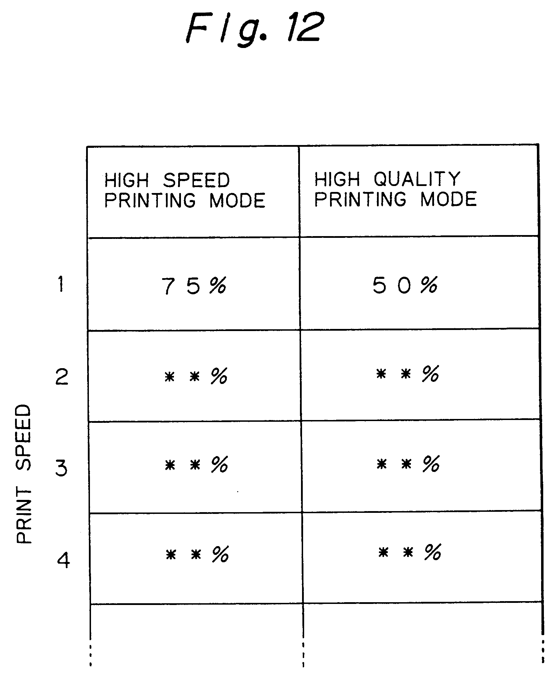

Figs. 3 to 13 relate to a first embodiment of the present invention.

As shown in Fig. 3, a print head 1 comprises 320 heating elements 2, divided into 5 heating element groups 3a to 3e of 64 dots each.

A heating means 4 supplies current to the individual heating elements 2 in the groups 3a to 3e in accordance with data to be printed. The number of the said groups 3a to 3e to be simultaneously heated, and also the pattern of heating elements 2 to be heated, is varied in accordance with a plurality of different printing modes as described below.

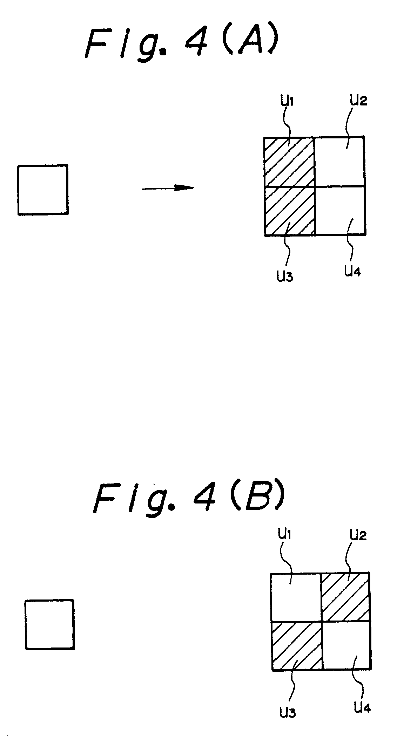

The individual heating elements 2 comprise a plurality of unit heating elements U1 though Un (Fig. 4 shows an example of four such unit heating elements). Each unit is controlled so as to be heated individually and independently.

A print percentage judgement means 5 (Fig. 3) subdivides the groups 3a to 3e, to be heated by the heating means 4, if the number of unit heating elements to be heated simultaneously is higher than a stipulated value, to enable a reduction in the amount of data to be printed at one time. This mode of operation requires an increased print period.

Since the energy required for printing is given by:

$$\varepsilon = \frac{(V - Vs)^2}{R} \cdot t/S$$

as earlier mentioned, the heating element resistance R must be decreased or the pulse width t must be enlarged in order to decrease the required supply voltage V. To obtain high speed printing with a low supply voltage in the present embodiment, the supply voltage V is set to a value in the range from 4.5 to 6.5 V, the heating element resistance value R to 45 $\Omega$ +/- 10%, and the heating element area S to 6 head resolutions/mm, and the pulse width is so set that the values (width x height) become 0.165 mm x 0.165 mm for 1-ply label paper and 0.165 mm x 0.330 mm for 2-ply paper.

To enable the pulse width t to be increased without sacrificing print speed, heating elements 2 in a plurality of print blocks 3a to 3e are heated simultaneously by heating elements 4.

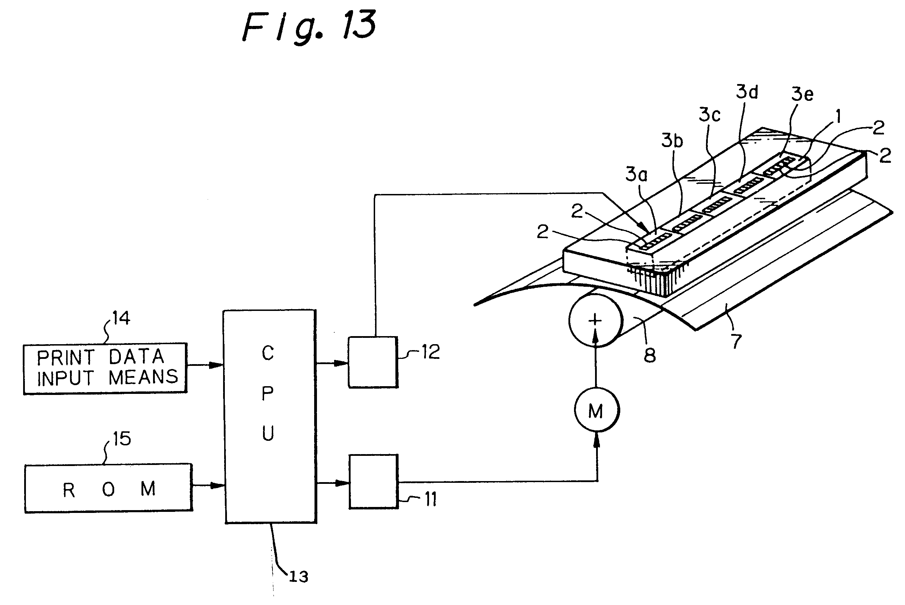

A print unit of a line thermal printer embodying the present invention is shown in Fig. 13 and comprises a sheet transfer means 8, consisting of platen rollers, etc. and being driven by a motor M, for moving a sheet of paper 7 (to be printed in a given direction at a predetermined speed and pitch), and a print head 1, consisting of a series of heating element groups 3a to 3e aligned parallel to the axis of rotation of the said sheet transfer means 8 and in contact with the paper 7. A sheet transfer controlling means 11 controls the said sheet transfer means 8 and a print block control means 12 drives and controls the heating element groups. The said sheet transfer controlling means 11 and the print block control means 12 are controlled by a central processing unit (CPU) 13 which is connected to print data input means 14 and print data memory means 15 consisting, for example, of ROM where designated print data is stored.

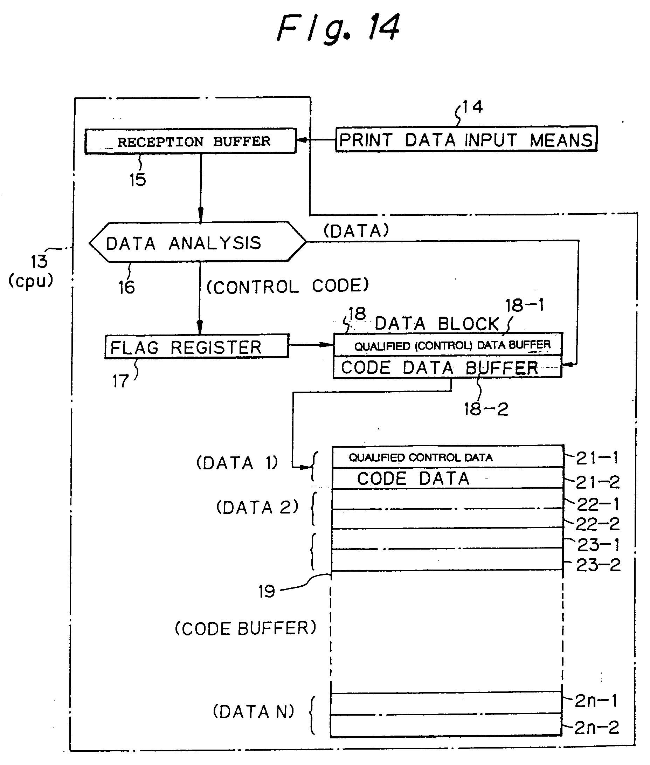

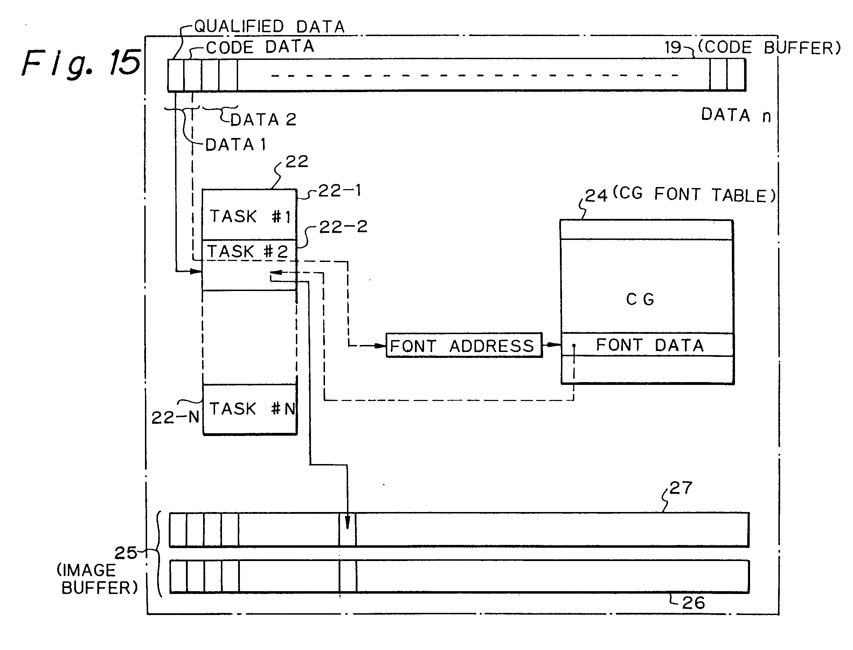

Print data processing procedures in the line thermal printer of Fig. 13 will now be explained with reference to Figs. 14 and 15.

Print data to be printed is supplied to the said print data input means 14, and is taken from there into reception buffer 15 inside the central processing unit (CPU) 13. A received data block is analyzed in data analysis means 16 so as to be separated into a control code CD and data D, the said control code CD being transferred to a flag register 17 and the data D being transferred to a code data buffer 18-2 of a data block 18.

The control code CD contains information for designating the type of printing mode (for example high speed printing, high quality printing, or double-density printing), and flag and parameter-set processing is executed in the said flag register 17 prior to transferal to a qualified (control) data buffer 18-1 of data block 18.

The information in the said data buffer 18 is transferred to a code buffer 19 which comprises RAM, for example.

The code buffer 19 has data set buffers (21-1, 21-2), (22-1, 22-2), ... (2n-1, 2n-2), each for storing qualified (control) data together with the related code data D.

The data to be printed that has been stored in the said code buffer 19 is transferred to a task table 22, shown in Fig. 15.

The task table 22 contains task units 22-1, 22-2, ... 22-n which store respective different tasks (Task #1 to Task #N). Each task unit 22-1, 22-2, ... 22-n contains the instructions needed to initiate an individual one of the different printing modes (such as a high speed, high quality, or double-density printing mode) that can be designated by the qualified (control) data. Any one of these tasks can be selected by appropriate qualified (control) data transferred from one of the data set buffers (21, 22, ..., 2n) of the code buffer 19.

If the qualified (control) data of a data block 1, which has been transferred from the said code buffer 19, indicates a high speed printing mode, the task unit 22-2 incorporating the task #2, which corresponds to a program for performing the said high speed printing mode, is thereby selected and the code data D incorporated in the said data block 1 is transferred simultaneously to the applicable task unit (22-2).

Font data, which has been stored in an applicable font address in a character generation (CG) font table 24 in accordance with a font address incorporated in the said code data, is transferred to the said task unit 22-2, and is processed by the said task unit 22-2, for use in the said high speed printing mode, in accordance with the program incorporated in the said task unit 22-2. The processed data is then written and stored in an image buffer 25.

The image buffer 25 includes, for example, 2 image buffers 26 and 27. The first image buffer 26 stores print data pertaining to one line of data character portions, to be printed now, and the second image buffer 27 stores the print data pertaining to the last preceding line of data character portions to be printed.

The image buffer 25 need not be restricted to such a combination of 2 image buffers, however, but may comprise a plurality of image buffers greater than 3.

The print control can use, for example, 32-line operation for a double-density mode and 16-line operation for a normal mode.

In the 32-line double-density mode, with the print head divided into 5 blocks as described, 160 time periods of electrification (energisation) are then required (32 lines x 5 electrifications) to print a character, and in the 16-line normal mode, 80 electrification periods are required (16 lines x 5).

In embodiments of the present invention that use both the double-density mode and the normal mode, each heating element 2 comprises 4 heating element units U1 to U4, shown in Figs. 3 and 4.

A line thermal printer in accordance with the described embodiment of the present invention may be provided with the following 4 printing modes.

1) High speed printing mode,
2) High quality printing mode,
3) Reduction printing mode, and
4) Double-density printing mode,

a) The high speed printing mode uses a so-called "3-burn" system wherein designated heating elements 2 in three consecutive blocks, of the five blocks 3a to 3e, are heated simultaneously by the heating means 4 during each printing period. The maximum number of heating elements that could be simultaneously electrified is 320 x 3/5 x 1/2 = 96 (marks), since there are 320 elements 2 in the print head, only three of the five blocks 3a to 3e are used simultaneously, and in order to raise the print speed the number of print dots in a horizontal direction is reduced by 50%.

If the number of marks to be printed simultaneously in practice is higher than a pre-set value, the print percentage judgement means 5 acts to reduce the amount of data to be handled simultaneously and the print period is extended.

Since judgement is made for individual print groups 3a to 3e in the print percentage judgement means 5, printing can be made without a significant fall in the print speed as a whole.

The relationship of print data to actual print is such that, in a character printing mode, a mark consisting of 2 dots in a vertical direction out of a 2 x 2 matrix is printed for each stored picture element (pixel), as shown in Fig. 4(a), and in an image printing mode, 2 dots in a oblique direction out of a 2 x 2 matrix are printed for each pixel as shown in Fig. 4(b).

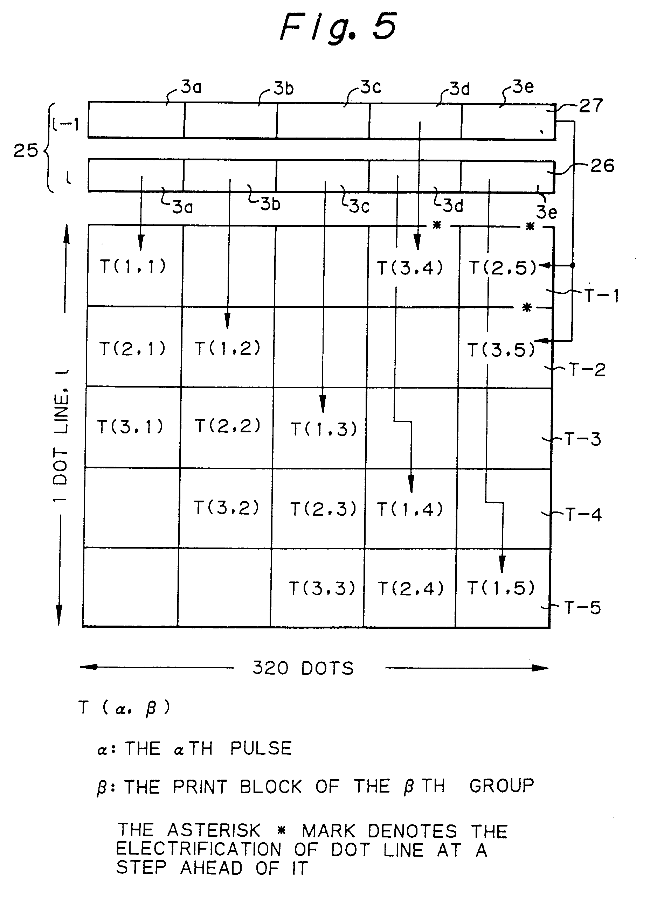

The 3-burn electrification timing is indicated by $T (\alpha, \beta)$ in Fig. 5, where $\alpha$ denotes the $\alpha$th pulse, $\beta$ denotes the $\beta$th group, and an asterisk (*) denotes the electrification of elements pertaining to a last preceding line of printed marks.

Thus, Fig. 5 shows five electrification pulse periods T-1 to T-5 needed to print a single mark line "ℓ", and shows which of the five blocks 3a to 3e are energized during each pulse period.

Two image buffers 26 and 27 are shown, the first image buffer 26 storing print data pertaining to the currently printed line ℓ, and the second image buffer 27 storing print data pertaining to the previous line ℓ-1.

The print processing control is such that when one cycle of electrification control for the current line ℓ has been completed the sheet 7 is moved a slight distance, by turning the motor M through a slight angle in response to a control signal from the sheet transfer control means 11.

The electrification timing is explained further below with reference to Fig. 5. When the first electrification pulse T-1 is generated, current is carried to the block 3a in accordance with data in the corresponding part of the first image buffer 26, and to the blocks 3d and 3e in accordance with data in the second image buffer 27, thereby to heat the individual heating elements 2 corresponding to that data.

The second electrification pulse T-2 is then generated, after the sheet 7 has been shifted through a preset short distance, so that current is carried to the blocks 3a and 3b in accordance with data in the first image buffer 26 and to the block 3e in accordance with data in the second image buffer 27, to individually heat appropriate heating elements 2.

When the third electrification pulse T-3 is generated, current is carried to the blocks 3a, 3b and 3c to heat individual heating elements 2 thereof in accordance with the contents of the image buffer 26, and so on.

(b) The high quality printing mode uses a so-called "2-burn" system, in which heating elements 2 in two consecutive print blocks 3a to 3e are simultaneously heated by the heating means 4.

Furthermore, to produce the high quality printing, the print percentage will tend to be twice as great as in the high speed printing mode. The maximum number of heating elements that could be simultaneously electrified in such a 2-burn process is 320 x 2/5 = 128 (marks) which is about 30% above the number for the high speed printing mode, and the print speed is accordingly lower than that in the high speed printing mode.

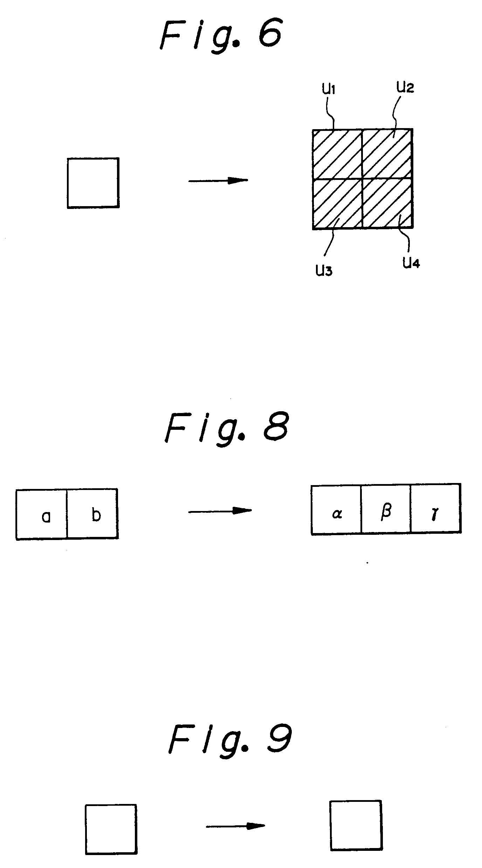

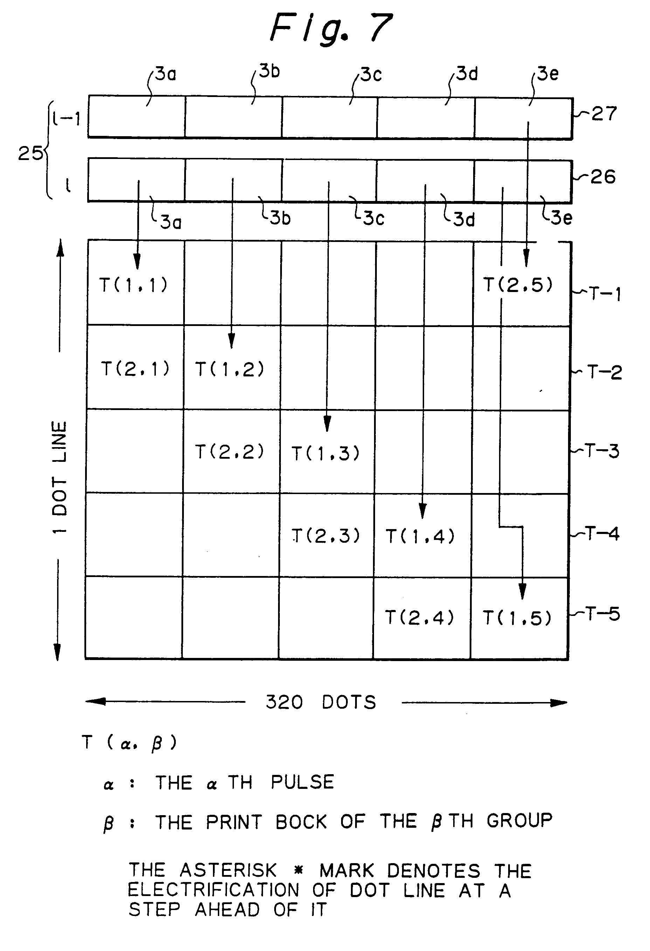

Since the high quality mode may be used to print on 2-ply paper and is a mode where the number of print marks is not reduced, the relationship of print data to the actual printing is such that all the dots in a 2 x 2 matrix are printed for each pixel, as shown in Fig. 6, in both the character printing mode and the image printing mode.

In Fig. 7 an electrification timing pulse is indi-

cated by $T(\alpha, \beta)$, denoting the timing of the $\alpha$th pulse of the $\beta$th group, and an asterisk (*) indicates electrification in accordance with the last preceding mark line.

A detailed explanation of Fig. 7 is omitted because it is similar to Fig. 5, the only difference between the two modes being a number of print blocks that are simultaneously electrified.

The fact that a higher print speed may be obtained by use of a plural burn system is explained below.

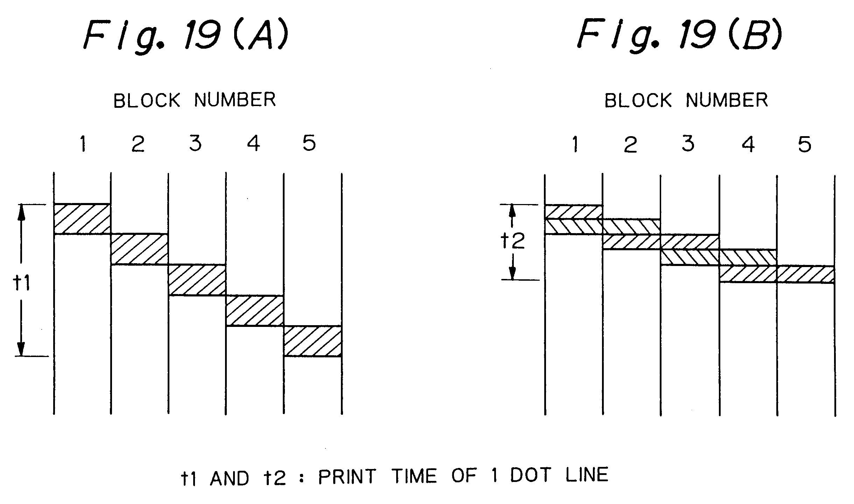

Consider a print head having a line of 320 heating elements divided into 5 groups (blocks) of 64 heating elements each, as shown in Fig. 19(A). A previously-considered system employs a method whereby the element blocks are electrified individually in sequence. In this method, the energy needed to mark the paper must be supplied, from the heating element, in one electrification pulse. However, as shown in Fig. 19(B), an embodiment of the present invention can reduce the width of each electrification pulse to half that of the said previously-considered system, by electrifying two adjacent blocks simultaneously. The line printing period t2 of Fig. 19(B) is seen to be about half that (t1) of Fig. 19(A).

The increased retention of heat by the printing head, due to increased printing speed, can have the added advantage of increasing the apparent efficiency of the energization process.

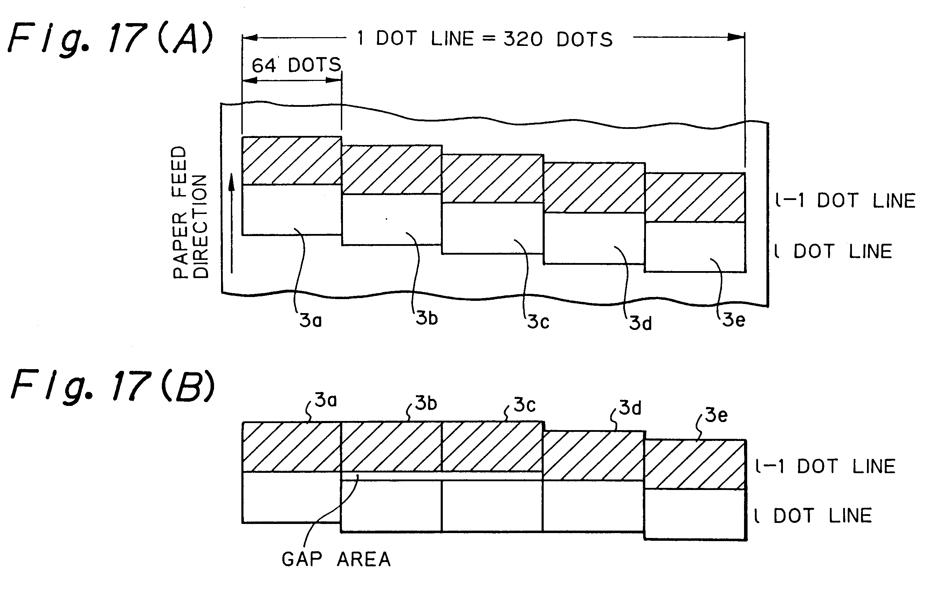

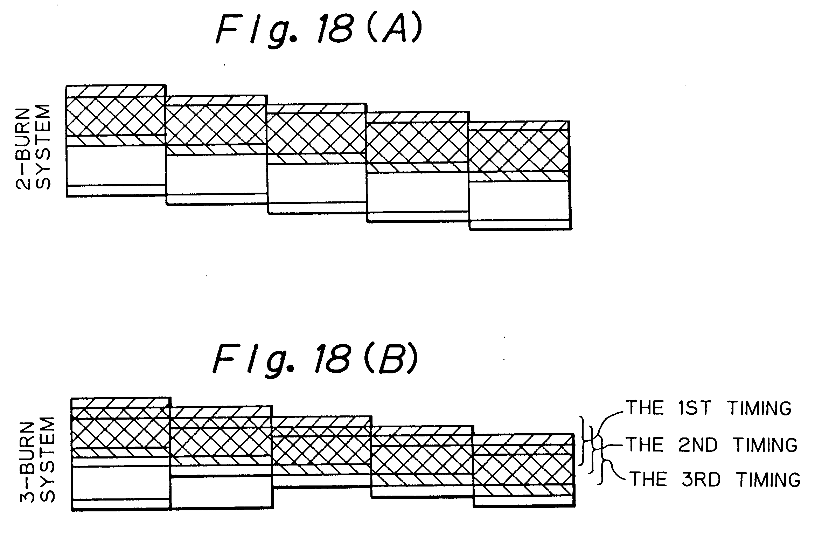

Differences between a printing method embodying the present invention and a previously-considered printing method are explained below with reference to Figs. 17 and 18.

Figs. 17(A) and (B) show examples of previously-considered printing methods, which use print heads having a single mark-line composed of 320 heating elements divided into 5 groups of 64 elements each. In the system of Fig.17(a), only 1 block is electrified during a single electrification pulse, and hence, for a given print group, a slight interval or gap is generated between the current line of print data and the previous line of print data, which has been printed during the generation of the previous electrification pulse for that group. In addition, the load required during a single electrification pulse is relatively large.

The method shown in Fig. 17(B) electrifies and processes three consecutive groups simultaneously (i.e. with one electrification pulse) but electrifies the remaining print groups individually with further electrification pulses. In this type of method, there is also a slight interval generated between the current print data and previous print data, which has been printed during the generation of previous electrification pulses.

However, in the illustrated embodiments of the present invention, a plurality of print blocks are simultaneously electrified by each electrification pulse in both the 2-burn and 3-burn systems, as shown in Fig. 18(A) and Fig. 18(B), and the same print data is printed several times at slightly different respective positions on the printing sheet with the different printings overlapping one another. This can serve to enhance the print speed, because the print density required at each electrification pulse can be reduced, thereby reducing the pulse time, while the overall resulting print density remains satisfactory.

c) The reduction printing mode is a mode for printing more characters in a line than in the high speed printing mode, and the relationship between the print data and the actual printing is such that two data bits, normally used respectively for two pixels, are used for printing 3 pixels as indicated in Fig. 8. The stored print data (a and b in Fig. 8) is converted to reduction printing data ($\alpha$, $\beta$ and $\gamma$) using Table 1 below.

Table 1

| a | b | $\alpha$ | $\beta$ | $\gamma$ |
|---|---|---|---|---|
| 0 | 0 | 0 | 0 | 0 |
| 0 | 1 | 0 | 1 | 1 |
| 1 | 0 | 1 | 1 | 0 |
| 1 | 1 | 1 | 1 | 1 |

The electrification timing is the same as that used for the high quality printing mode.

d) A double density printing mode is a mode in which 320 marks per line are used for printing data, and the relationship of the stored print data and the actual printing is such that 1 mark is printed for each stored pixel as shown in Fig. 9. This is the highest density printing possible and may be used for printing bar codes, for example.

The electrification timing is the same as that used for the high quality printing mode.

In each of the four operating modes, the print percentage judgement means 5 can be employed with a view to stabilising the print quality by decreasing the influence of voltage drop due to internal impedance of a battery.

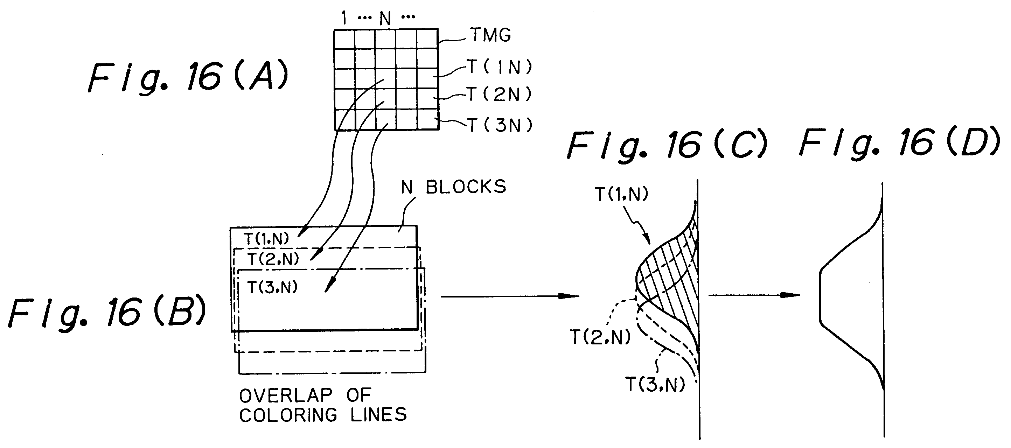

Fig. 16 illustrates how print quality, i.e. the density of printing, is enhanced by using a plural burn system embodying the present invention.

Fig. 16(A) is an electrification timing diagram (TMG), showing that the N-th print block is electrified by electrification pulses F1 to F3, using the 3-burn system (see Fig. 16(B)). A previously-considered system electrifies a single print group N only once, thereby obtaining the print density distribution shown as a shaded area of Fig. 16(C), and the resulting print density can look rather thin. In the 3-burn embodiment of the present invention, however, the print density distribution shown in Fig. 16(D) can be obtained, which tends to look heavier, because the same print group N is electrified three times and the printed sheet moves a small distance between successive electrification pulses.

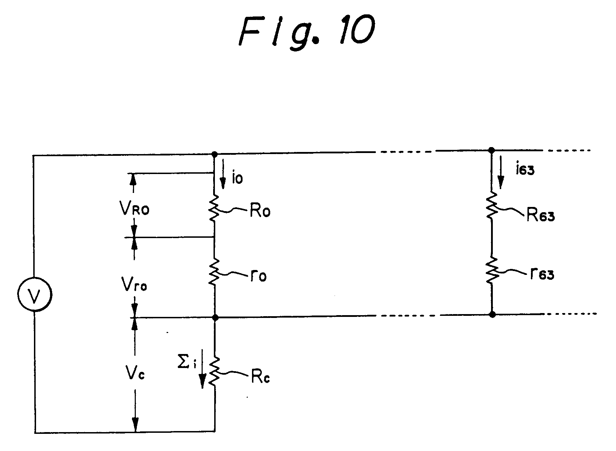

An equivalent circuit of part of the print head used in an embodiment of the present invention is shown in Fig. 10, in which $R_0$ and $R_{63}$ are heating element resistors, $r_0$ to $r_{63}$ are lead resistors, Rc is a common conductor resistance, $i_0$ to $i_{63}$ are the heating element currents flowing through the lead resistors (hereinafter to be called the heating lead current), $V_{R0}$ to $V_{R63}$ are the voltages applied to the heating element resistors (hereinafter to be called the heating element voltages), $V_{r0}$ to $v_{r63}$ are the voltages across the lead resistors (hereinafter to be referred to as the lead voltages), Vc is the voltage across the common conductor resistor (hereinafter to be called the common voltage), and $\Sigma i$ is the current flowing through the common conductor resistor Rc (hereinafter to be named the common current), which is equal to the sum of the heating lead currents $i_0$ to $i_{63}$.

The heating element voltage $V_{R0}$, the lead voltage $V_{r0}$ and the common voltage Vc may be expressed as:

$$V_{R0} = i_0 . R_0$$

$$V_{r0} = i_0 . r_0$$

$$Vc = A_{(i)} . \Sigma i$$

where $A_{(i)}$ is variable because of the influence of non-linear components, for example an internal transistor, and $A_{(i)}.\Sigma i$ is dependent upon the number of electrified heating elements 2. Therefore, Vc is also variable.

The common conductor resistance Rc, shown in Fig. 10, is non-linear, and its value varies in dependence upon the number of heating elements electrified at one time.

The influence of $r_0$ on the print energy $\varepsilon$ can become significantly greater if the value of the heating element resistor $R_0$ becomes smaller. If the value of the heating element resistor $R_0$ is sufficiently large, the value of lead resistor $r_O$ is only a small percentage of the overall resistance so its influence is small, but if the value of the heating element resistor $R_0$ is relatively small, the small value of the lead resistor $r_O$ becomes greater as a percentage of the overall resistance and its influence becomes relatively greater.

In a situation where n ($0 < n \leq 64$) heating elements 2 are electrified, the following equation applies:

$$i_0 . R_0 + i_0 . r_0 + Vc = V.$$

The voltage across the heating element 2 is therefore given by:

$$V_{RO} = i_0 . R_0 = V - Vc - i_0 . r_0,$$

and therefore the print energy is given by:

$$\varepsilon = i_0.R_0{}^2.t/S$$
$$= (V - Vc - i_0.r_0)R_0.t/S.$$

In the case of the supply voltage being supplied by a battery, the actual applied voltage V is given by

$$V = V_D - r_b.\Sigma i,$$

where   $V_D$ = battery voltage,
        $r_b$ = internal battery impedance, and
        $\Sigma i$ = total current

Therefore, the print energy can be expressed as:

$$\varepsilon = (V_D - i_0.r_0 - Vc - r_b.\Sigma i)R_0.t/S$$
$$= [V_D - i_0.r_0 - (A_{(i)} + r_b)\Sigma i]R_0.t/S$$

The influence on the print energy of the term $(A_{(i)} + r_b)\Sigma i$ is large compared with the $i_0.r_0$ term. For this reason it may be necessary to suodivide the elements, so that the energy fluctuation is reduced, in accordance with a print percentage judgement.

The detection of a condition when this suodivision is required is made in the high speed and high quality printing modes by the print percentage judgement means 5.

If the percentage of elements to be printed simultaneously exceeds a certain value (for example 75% 9in the high speed printing mode), the heating element groups 3a to 3e are subdivided into smaller groups and the electrification cycle frequency is decreased.

Such subdivision requires a corresponding reduction of overall print speed, which promotes the diffusion of heat energy from the print head.

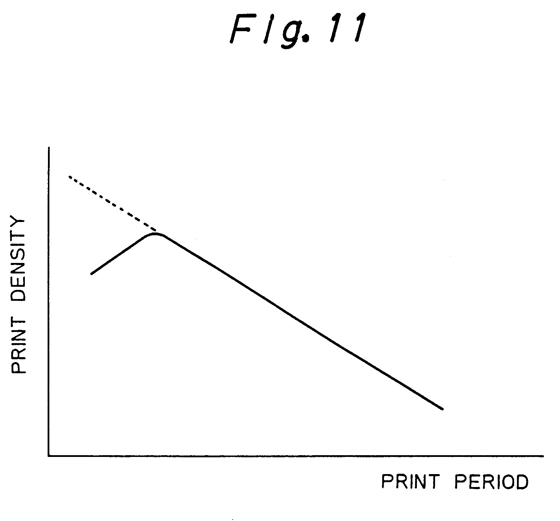

As can be inferred from Fig. 11, if the print speed decreases (i.e. the print period increases), a greater print energy $\varepsilon$ is required to obtain a given element temperature. If the print speed is too high, the pulse width T is too small for a sufficient amount of print energy to be obtained. However, if the print speed is too low, the density becomes lower, and a practical print speed cannot be obtained any longer if the pulse width T needs to be enlarged excessively in order to completely colour a single dot.

By expressing the relationship between print percentage and print speed in a form of a table, and by changing the print speed and the preset value of print percentage, on the basis of the table, in accordance with the printing mode and the paper quality of thermosensitive paper to be used, stable print quality can be obtained together with acceptably high speed, even with a low supply voltage, for example about 5 V.

The illustrated embodiment has been explained using a print head with 320 heating elements per line divided into 5 print groups of 64 elements each. However, the total number of heating elements and the number of groups of heating elements in the print head can, needless to say, be different, in accordance with particular equipment requirements and purposes.

A second embodiment of the present invention may have a plurality of printing modes, which depend upon the type of thermosensitive paper in use.

The basic structure of this embodiment is almost identical to that shown in Fig. 3. However, in this embodiment the electrification control means 6 is for controlling the electrification to the print head by the heating means 4 and for determining the electrification cycle to the print head 1, in dependence upon which print mode has been selected, with the feed of thermosensitive paper stopped. The print head 1, as shown in Fig. 3, may have a plurality of print groups 3a to 3e, each made up of a preset number of heating elements 2, and it may also select a plurality of print groups for electrification at the same time.

The energy required for the printing, as earlier mentioned, is given by:

$$\varepsilon = \frac{(V-Vs)^2}{R}.t/S$$

The pulse width t may be set to a small value because of the various conditions described above, but the effective print energy $\varepsilon$ can be made large by performing the electrification a plural number of times.

The present embodiment may have an applied voltage of 4.8V, a heating element resistance of 45$\Omega$(+/-10%), a heating element area S of width (W)0.165 mm and height (H)0.165 mm (for 1-ply label paper). The area S may be (W)0.165 mm x (H)0.165mm or (W)0.165 mm x (H)0.330 mm for 2-ply paper, with a head resolution of 6/mm.

To avoid sacrificing print speed, this embodiment may heat heating elements 2 in a plurality of print groups 3a to 3e simultaneously, using the heating means 4.

A line thermal printer in accordance with this embodiment may have two modes:

a) 1-ply printing mode; and
b) 2-ply printing mode,

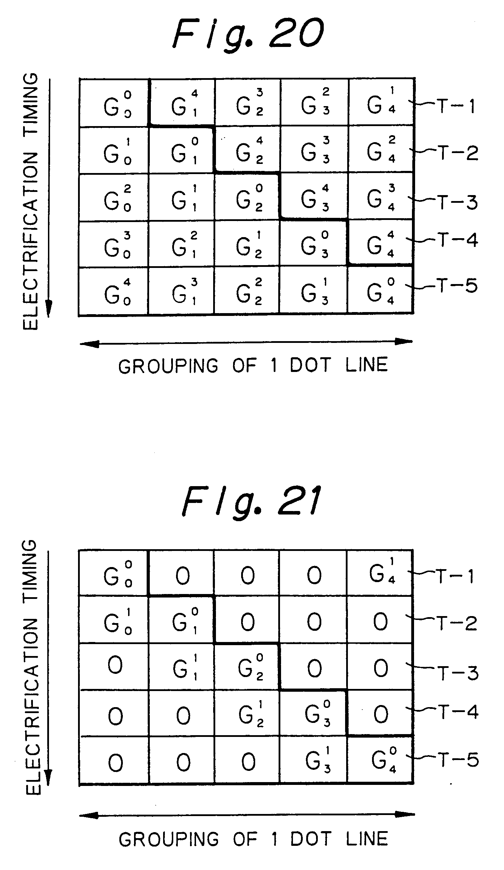

its electrification timing being as shown in Fig. 20.

In Fig. 20, each group electrification is represented by $G_a{}^b$, where $\underline{a}$ gives the group number and $\underline{b}$ gives the electrification pulse number for that group (in this representational system the numbering runs from 0 to 4 for the five element groups and also for the five electrification pulses, but the latter are denoted as T-1 to T-5 down the right-hand side of the diagram). The area below the thick line shows the electrification timing for the current dot line, and the area above the thick line shows the electrification timing for the last preceding dot line.

For example, the first line $(G_0{}^0, G_1{}^4, G_2{}^3, G_3{}^2, G_4{}^1)$

means that the first electrification of Group O, the fifth electrification of Group 1, the fourth electrification of Group 2, the third electrification of Group 3 and the second electrification of Group 4 are to be made at the same time, with Group O data belonging to the current line and Groups 1 to 4 data belonging to the previous line.

The cycles of b are determined by the capacity of the power source and the type of paper in use:

a) For the 1-ply printing mode just two electrification cycles may be used, for example, as the print energy ε may be small for printing on 1-ply thermosensitive paper. The electrification cycles are determined by the electrification control means 6 as shown in Fig. 21. The numeral 0 in the figure shows a state of no electrification. If two print groups are electrified simultaneously, as shown in Fig. 21, the number of marks to be printed together may increase and the print percentage may rise, depending on the data to be printed. If the print percentage exceeds a preset value, the amount of data to be printed simultaneously is reduced and the print period t is enlarged by the print percentage judgement means 5. However, because the judgement is made in respect of individual print blocks 3a through 3e, the printing can be effected without any fall in the executed print speed.

b) For the 2-ply printing mode, a higher print energy ε may be required in comparison with the 1-ply printing mode. The realisation of a higher print speed may be attempted with a 2-burn line as a single heating line, which results in a fall in the print resolution in the feed direction of the paper compared with that in the 1-ply printing mode. Although a gap may be seen between the current mark line and the previous mark line, the print energy ε is larger and so the printed mark is larger than in the 1-ply printing mode, and is sufficiently large to be of practical use. In this case, a high quality print can be obtained by lowering the print speed.

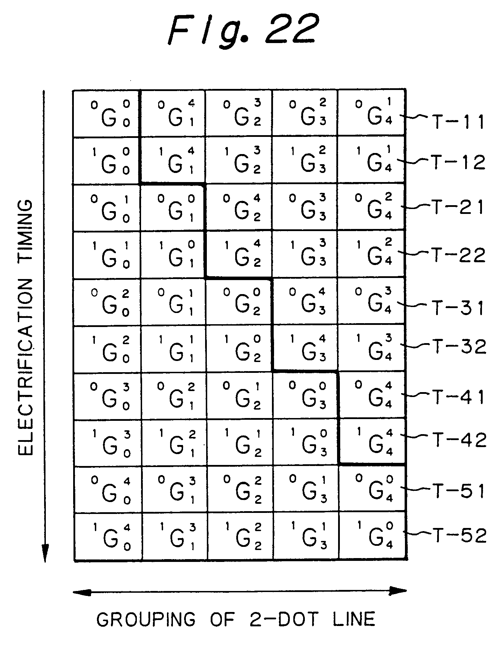

The 2-ply printing mode requires a higher print energy ε than that need in the 1-ply printing mode, and the electrification timing becomes that shown in Fig. 22, where $\underline{a}$ of ${}^{c}G_{a}{}^{b}$ represents the group, $\underline{b}$ the electrification timing pulse for that group, and $\underline{c}$ the timing in a case where the electrification timing is doubled, while the area above a thick dividing line stands for the electrification timing of the previous dot line.

When the electrification timing as shown in Fig. 22 is employed, the print pulse width t in the formula below is doubled,

$$\varepsilon = \frac{(V - Vs)^{2}}{R} . t/S$$

thereby doubling the print energy ε while limiting any fall in print speed.

For example, if two overlying sheets of thermosensitive paper are to be printed the print energy required is higher than that required for printing on a single sheet. The extra print energy can be supplied to the heating elements 2 by providing a second electrification pulse T-12 in addition to the usual pulse T-11 as shown in Fig. 22.

In general, the additional electrification pulse relating to a pulse T-n1, is represented as T-n2.

The length of the additional electrification pulse is appropriately determined by the type and number of sheets of thermosensitive paper, the print speed, etc.

For example, the ratio of additional electrification time to usual time could be 0.5, in the case that there are two sheets of thermosensitive paper.

It is desirable in the embodiment of Fig. 22 to make the print data supplied to the heating elements 2 during the usual electrification pulse to be identical to the print data supplied to the heating elements 2 during the additional electrification pulse.

If the print energy is increased, the region to be coloured on the printed sheet is enlarged, and hence the probability for it to overlap with other print data increases, which may lead to a decrease in print resolution.

The print percentage judgement means 6 may be used for both the usual electrification pulses and the additional electrification pulses, to subdivide the print groups if the amount of data to be printed simultaneously exceeds a preset value, for example 50% of the total possible.

This case can be made possible if a single line comprises 16 bits.

In the double-density mode, the elements to be electrified to print the marks of one print line are energised on the basis of one mark for each pixel.

The print/colouring energy is proportional to the square of applied voltage, as described above.

A drop in supply voltage may be caused if there is an excessive current, because of internal resistance in a power source such as a battery.

Therefore, it is possible that the print energy supplied to the heating elements 2 may fluctuate, even if the elements are electrified for the same length of time, which will influence the print quality obtained.

A line thermal printer embodying the present invention may adopt a system for subdividing the print group in order to avert the above problem, and such a method may count the number of elements to be electrified simultaneously inside the group in question and suodivide that print group into two or into four, depending on the said number of elements.

When such a subdivided electrification of one print block has been completed, a similar process may be applied to the next print block.

The predetermined value of the number of marks that can be printed simultaneously varies with the current capacity of the power source (battery) to be used.

If the amount of data to be printed simultaneously is low, the whole print group can be printed at one time, without any subdivision.

If the amount of data to be printed simultaneously is slightly high, it may be possible to divide the heating elements inside a print group by means of software, and to print the data sequentially.

If the amount of data to be printed simultaneously is very high, the heating elements inside a print group are divided into four subgroups by means of software and the subgroups are printed in sequence from one end.

In this way, the present embodiment can control the current load on the battery and can achieve stable print quality.

Optimum printing may be achieved, depending upon the application, by the said two printing modes, and the stabilization of print quality may be realised by the print percentage judgement means 5 decreasing the influence of a drop in supply voltage due to the internal impedance of the supply battery.

Thus, a fall in print speed can be prevented even with a low supply voltage, for example about 4.8V, and favourable print quality can be obtained using various types of thermosensitive paper.

In addition, data can be printed in dense/thin gradation by controlling the electrifying cycle because, in general, the print density goes up with the print energy used.

The second embodiment of the present invention uses a print head with 320 heating elements divided into five print groups of 64 elements each, but it is apparent that the total number of heating elements making up the print head and the number of print groups are variable, depending upon the particular application.

Furthermore, the electrification cycles can be determined, in ways different from those discussed in relation to the said embodiment.

High-resolution printing has become possible following improvements in techniques for manufacturing thermal line print heads, and allows the letter size of reduction letters, double square letters, etc, to be easily changed.

In an embodiment of the present invention, the standard letter size is programmed to be printed by converting the print data for each pixel of the letter so as to cause the resulting corresponding printed portion of the letter to be twice as high and twice as wide as it would have been without such conversion.

Printing is made without any reduction processing in the high quality printing mode (HQ) after the above-described extension conversion has been executed, and in this case the amount of data to be printed simultaneously tends to become higher than that prior to the said extension conversion.

In the high speed printing mode (HS) reduction processing (thinning out of the print dots) is performed in both the vertical and horizontal directions, after the said extension conversion, in order to reduce the actual amount of data to be printed simultaneously.

Since the amount of data to be printed simultaneously in the said high speed printing mode (HS) frequently falls under the preset threshold value of the print percentage judgement means, the print speed can be made higher.

However, the print density becomes thinner as a whole because the number of print dots decreases.

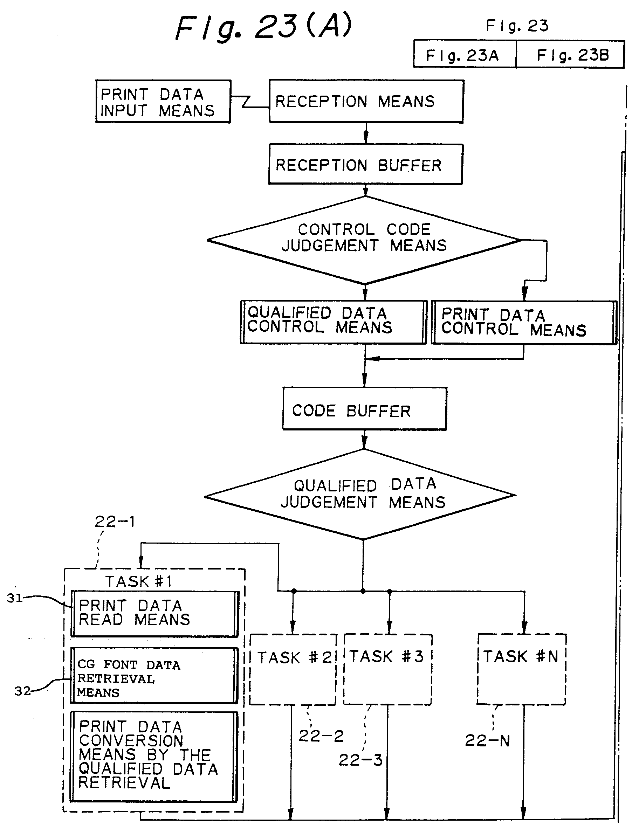

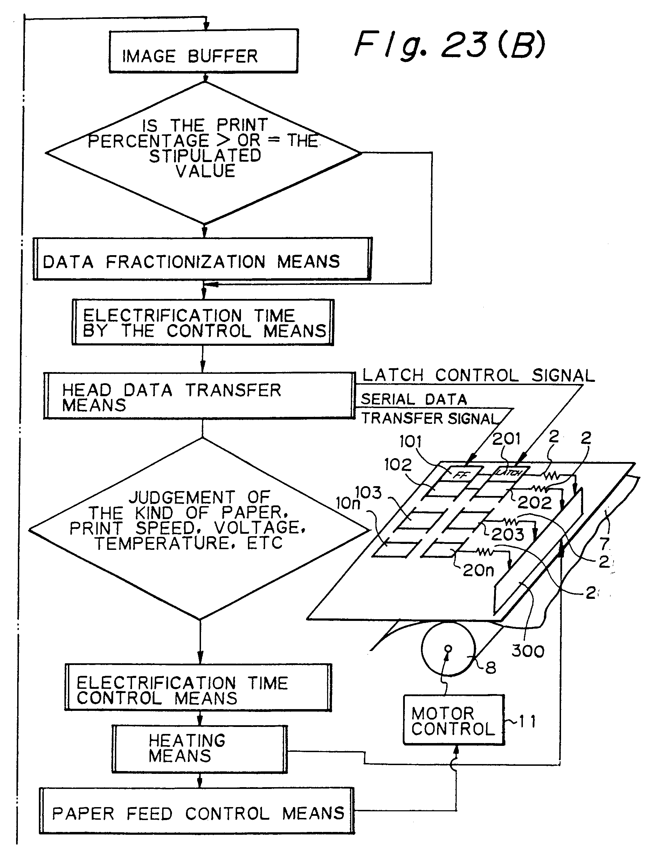

Finally, a method of print control of a line thermal printer embodying the present invention will be explained with reference to Figs. 14 and 23.

Data pertaining to one line portion of print data to be printed is first entered into reception means of a computer, which has a central processing means, from appropriate input means 14, the said print data is then taken into a reception buffer 15.

Next, successive sets of print data are analysed by data analysis means 16. Control code judgement means assess, from the print data, such information as the designated print mode and the like, employing qualified data processing means comprising the flag register 17, and store the aforementioned qualified (control) data in qualified data buffers (21-1 to 2n-1) of the code buffer 19.

The print (code) data part of each set of print data is separated and processed by print (code) data control means, and code data which is the result of this processing is stored into the appropriate one of the code data buffers 21-2 to 2n-2 in the code buffer 19 via the data block 18.

The qualified (control) data is read out from each set of data in the code buffer 19 to make a judgement and determine which type of print mode is to be used, and on the basis of this determination the appropriate task unit (for example, Task Unit #1) 22-1 is selected from task table 22 (Fig. 15).

Thereafter, the qualified (control) data and code (print) data of the data set concerned, which is stored in the said code buffer 19, are transferred to the said selected task unit #1. Appropriate print data is read out from the applicable CG font table 24 (Fig. 15), in accordance with a code address portion of the said code (print) data, using print data read means 81 and CG font data retrieval means 82 which are incorporated in the said task unit #1. The print mode is determined and then print data is converted into a required form using print data conversion means 83.

The print data which has been converted in the said task unit is transferred into an image buffer 25 (Fig. 15), respective blocks of converted print data being stored in the appropriate buffer locations.

The number of heating elements 2 to be electrified on the basis of print data inside the said image buffer 25 is ascertained, and the print percentage is calculated, for each print block (group) of the print head.

If the said print percentage is greater than or equal to the stipulated threshold value, the said print data is further subdivided, inside the print block (group) concerned, by data fractionization means.

However, if the said print percentage is smaller than the stipulated threshold value the data fractionization means are by-passed.

The electrification cycle time is then determined in accordance with the printing mode, which depends on the type and number, for example, of thermosensitive paper sheets to be used.

The print data is next transferred to the print head by head data transfer means contained in print block control means 12 (Fig. 13).

The said print head comprises latch circuits 201 to 20n, which are connected respectively to a plurality of heating elements 2, and flip flops 101 to 10n connected respectively to the said latch circuits. The said heating elements 2 are also driven by heating means, included in the said print block control means 12, via respective drive circuits indicated as a block 300 in Fig. 23(B).

Latch control signals, contained in the said print data, are supplied to the said latch circuits, and serial data transfer signals are supplied to the said flip flop circuits.

The required print speed, print voltage, print temperature, print percentage, printing mode and kind and number of thermosensitive paper are judged from the said print data. Drive conditions are then set by electrification time control means, on the basis of this judgement, and the heating means, included in the said print block control means 12, are operated on the basis of these drive conditions to drive the designated heating elements 2 individually.

The necessary data is supplied by paper feed control means, in dependence on the said print data, to a motor control 11 driving a motor serving to transfer sheets to be printed. The motor can thus be caused to turn platen roller 8 through a specified angle so as to move the print sheet through a stipulated distance.

## Claims

1. A line thermal printer, for printing on thermosensitive paper (7), comprising electrical heating means (4) connected through control means to a print head (1) having a line of heating elements (2) arranged for contacting such paper and energizable selectively by the said heating means (4) to produce printing marks on the paper, the said control means being operable to supply electrical energy from the said heating means to different predetermined groups (3a to 3e) of the said heating elements (2) at different respective times in the course of a printing operation, characterised in that the printer has a mode of operation in which the control means supply electrical energy to at least one of the said groups (3a to 3e) to effect printing of marks pertaining to one line ($\ell$) of data character portions to be printed and simultaneously supply electrical energy to at least one other of the said groups (3a to 3e) to effect printing of marks pertaining to a last preceding line ($\ell$-1) of the data character portions to be printed.

2. A line thermal printer as claimed in claim 1, wherein the said mode of operation is such that the printing of one of the said data character portions is effected by printing a mark, pertaining to that character portion, a predetermined plural number of times and moving the paper (7) a small distance, in a direction transverse to the said line of heating elements (2), between successive printings of the mark, the nth printing of a mark by the said one of the said groups (3a to 3e) being effected simultaneously with the (n+1)th printing of a mark by the said one other of the groups.

3. A line thermal printer as claimed in claim 1, wherein the said mode of operation is such that the printing of one of the said data character portions is effected by printing a mark, pertaining to that character portion, a predetermined plural number of times whilst the paper (7) is kept fixed in position, the nth printing of a mark by the said one of the said groups (3a to 3e) being effected simultaneously with the (n+1)th printing of a mark by the said one other of the groups.

4. A line thermal printer as claimed in any preceding claim, wherein there is further provided print percentage judgement means (5) for detecting whether the amount of data to be printed in accordance with the said mode of operation would require simultaneous energisation of more than a preset number of the heating elements of such a group and, if such a situation is detected, modifying the said mode of operation of the printer so as to cause the group concerned to be subdivided into smaller groups of heating elements, which smaller groups are controlled individually, so that the number of heating elements (2) to be energized simultaneously in one group does not exceed the said preset number.

5. A line thermal printer as claimed in any preceding claim, wherein the said mode of operation is selectively controllable to effect printing on different types of thermosensitive paper without changing the speed of printing.

6. A method of operating a line thermal printer, for printing on thermosensitive paper (7), comprising electrical heating means (4) connected through control means to a print head (1) having a line of heating elements (2) arranged for contacting such paper and energizable selectively by the said heating means (4) to produce printing marks on the paper, the said control means being operable to supply electrical energy from the said heating means to different predetermined groups (3a to 3e) of the said heating elements (2) at different respective times in the course of a printing operation, characterised in that the control means supply electrical energy to at least one of the said groups (3a to 3e) to effect printing of marks pertaining to one line ($\ell$) of data character portions to be printed and simultaneously supply electrical energy to at least one other of the said groups (3a to 3e) to effect printing of marks pertaining to a last preceding line ($\ell$-1) of the data character portions to be printed.

7.  A method as claimed in claim 6, wherein the printer is a printer as claimed in any one of claims 2 to 5.

**Patentansprüche**

1.  Ein Zeilen-Thermodrucker zum Drucken auf temperaturempfindlichem Papier (7) mit einem elektrischen Beizmittel (4), das durch Steuermittel mit einem Druckkopf (1) verbunden ist, der eine Zeile von Heizelementen (2) aufweist, die zum Berühren eines solchen Papiers angeordnet und durch das Heizmittel (4) selektiv erregbar sind, um Druckmarkierungen auf dem Papier zu erzeugen, wobei die Steuermittel betreibbar sind, um elektrische Energie von dem Heizmittel verschiedenen vorbestimmten Gruppen (3a bis 3e) der Heizelemente (2) zu verschiedenen jeweiligen Zeiten im Verlauf eines Druckvorgangs zuzuführen, dadurch gekennzeichnet, daß der Drucker einen Betriebsmodus aufweist, in dem die Steuermittel elektrische Energie zumindest einer der Gruppen (3a bis 3e) zuführen, um ein Drucken von Markierungen auszuführen, die zu einer Zeile ($\ell$) von zu druckenden Datenzeichenteilen gehören, und gleichzeitig elektrische Energie zumindest einer anderen der Gruppen (3a bis 3e) zuführen, um ein Drucken von Markierungen auszuführen, die zu einer letzten vorhergehenden Zeile ($\ell$-1) der zu druckenden Datenzeichenteile gehören.

2.  Ein Zeilen-Thermodrucker nach Anspruch 1, worin der Betriebsmodus derart ist, daß das Drucken eines der Datenzeichenteile ausgeführt wird, indem eine zu diesem Zeichenteil gehörende Markierung eine vorbestimmte Anzahl von Malen Zeiten gedruckt wird und das Papier (7) über eine kleine Wegstrecke in einer zu der Zeile von Heizelementen (2) transversalen Richtung zwischen aufeinanderfolgenden Drucken der Markierung bewegt wird, wobei das n-te Drucken einer Markierung durch die eine der Gruppen (3a bis 3e) gleichzeitig mit dem (n+1)-ten Drucken einer Markierung durch die andere der Gruppen ausgeführt wird.

3.  Ein Zeilen-Thermodrucker nach Anspruch 1, worin der Betriebsmodus derart ist, daß das Drucken eines der Datenzeichenteile ausgeführt wird, indem eine zu diesem Zeichenteil gehörende Markierung eine vorbestimmte Anzahl von Malen gedruckt wird, während das Papier (7) an einer Position festgehalten wird, wobei das n-te Drucken einer Markierung durch die eine der Gruppen (3a bis 3e) gleichzeitig mit dem (n+1)-ten Drucken einer Markierung durch die andere der Gruppen ausgeführt wird.

4.  Ein Zeilen-Thermodrucker nach einem vorhergehenden Anspruch, worin ferner vorgesehen ist ein Druckprozentanteil-Beurteilungsmittel (5) zum Detektieren, ob die Menge von gemäß dem Betriebsmodus zu druckenden Daten eine gleichzeitige Erregung von mehr als einer voreingestellten Anzahl der Heizelemente solch einer Gruppe erfordern würde, und, falls solch eine Situation detektiert wird, Modifizieren des Betriebsmodus des Druckers, um so zu veranlassen, daß die betreffende Gruppe in kleinere Gruppen von Heizelementen unterteilt wird, welche kleineren Gruppen einzeln gesteuert werden, so daß die Anzahl von Heizelementen (2), die in einer Gruppe gleichzeitig erregt werden sollen, die voreingestellte Anzahl nicht überschreitet.

5.  Ein Zeilen-Thermodrucker nach einem vorhergehenden Anspruch, worin der Betriebsmodus selektiv steuerbar ist, um ein Drucken auf verschiedenen Arten von temperaturempfindlichem Papier ohne Ändern der Druckgeschwindigkeit auszuführen.

6.  Ein Verfahren zum Betreiben eines Zeilen-Thermodruckers zum Drucken auf temperaturempfindlichem Papier (7) mit einem elektrischen Heizmittel (4), das durch Steuermittel mit einem Druckkopf (1) verbunden ist, der eine Zeile von Heizelementen (2) aufweist, die zum Berühren eines solchen Papiers angeordnet und durch das Heizmittel (4) selektiv erregbar sind, um Druckmarkierungen auf dem Papier zu erzeugen, wobei die Steuermittel betreibbar sind, um elektrische Energie von dem Heizmittel verschiedenen vorbestimmten Gruppen (3a bis 3e) der Heizelemente (2) zu verschiedenen jeweiligen Zeiten im Verlauf eines Druckvorgangs zuzuführen, dadurch gekennzeichnet, daß die Steuermittel elektrische Energie zumindest einer der Gruppen (3a bis 3e) zuführen, um ein Drucken von Markierungen auszuführen, die zu einer Zeile ($\ell$) von zu druckenden Datenzeichenteilen gehören, und gleichzeitig elektrische Energie zumindest einer anderen der Gruppen (3a bis 3e) zuführen, um ein Drucken von Markierungen auszuführen, die zu einer letzten vorhergehenden Zeile ($\ell$-1) der zu druckenden Datenzeichenteile gehören.

7.  Ein Verfahren nach Anspruch 6, worin der Drucker ein Drucker nach einem der Ansprüche 2 bis 5 ist.

**Revendications**

1.  Imprimante thermique ligne par ligne, pour impression sur du papier thermique (7), comprenant un moyen de chauffage électrique (4) connecté par des moyens de commande à une tête d'impression (1) comportant une ligne d'éléments de chauffage (2) disposés pour être en contact avec ce papier et pouvant être mis sous tension sélectivement par ledit moyen de chauffage (4) pour produire des marques d'impression sur le papier, lesdits moyens de commande pouvant être mis en fonctionnement pour fournir de l'énergie électrique provenant dudit moyen de chauffage à différents groupes prédéterminés (3a à 3e) desdits éléments de chauffage (2) à différents temps respectifs au cours d'une opération d'impression, caractérisée en ce que l'imprimante a un mode de fonctionnement dans lequel les moyens de commande fournissent de l'énergie électrique à au moins l'un desdits groupes (3a à 3e) pour exécuter une impression de marques appartenant à une ligne ($\ell$) de parties de données de caractère à imprimer et fournissent simultanément de l'énergie électrique à au moins un autre desdits groupes (3a à 3e) pour exécuter une impression de marques appartenant à une dernière ligne précédente ($\ell$-1) des parties de données de caractère à imprimer.

2. Imprimante thermique ligne par ligne selon la revendication 1, dans laquelle ledit mode de fonctionnement est tel que l'impression de l'une desdites parties de données de caractère est réalisée par impression d'une marque, appartenant à cette partie de caractère, un certain nombre de fois prédéterminé et en déplaçant le papier (7) d'une petite distance, dans une direction transversale par rapport à ladite ligne des éléments de chauffage (2), entre des impressions successives de la marque, la $n^{\text{ième}}$ impression d'une marque par ledit desdits groupes (3a à 3e) étant exécutée en simultanéité avec la $(n+1)^{\text{ième}}$ impression d'une marque par ledit autre des groupes.

3. Imprimante thermique ligne par ligne selon la revendication 1, dans laquelle ledit mode de fonctionnement est tel que l'impression de l'une desdites parties de données de caractère est exécutée par impression d'une marque, appartenant à cette partie de caractère, un certain nombre de fois prédéterminé pendant que le papier (7) est maintenu en position fixe, la $n^{\text{ième}}$ impression d'une marque par ledit desdits groupes (3a à 3e) étant exécutée en simultanéité avec la $(n+1)^{\text{ième}}$ impression d'une marque par ledit autre des groupes.

4. Imprimante thermique ligne par ligne selon l'une quelconque des revendications précédentes, dans laquelle est en outre fourni un moyen d'estimation de pourcentage d'impression (5) pour détecter si la quantité de données à imprimer selon ledit mode de fonctionnement exige la mise sous tension simultanée de plus d'un nombre préétabli des éléments de chauffage de ce groupe et, si cette situation est détectée, pour modifier ledit mode de fonctionnement de l'imprimante de manière à subdiviser le groupe concerné en sous-groupes plus petits d'éléments de chauffage, pour que le nombre d'éléments de chauffage (2) à mettre sous tension simultanément dans un groupe ne dépasse pas ledit nombre préétabli.

5. Imprimante thermique ligne par ligne selon l'une quelconque des revendications précédentes, dans laquelle ledit mode de fonctionnement est contrôlable sélectivement pour exécuter une impression sur différents types de papier thermique sans changer la vitesse d'impression.

6. Procédé pour faire fonctionner une imprimante thermique ligne par ligne, pour impression sur du papier thermique (7), comprenant un moyen de chauffage électrique (4) connecté par des moyens de commande à une tête d'impression (1) comportant une ligne d'éléments de chauffage (2) disposés pour être en contact avec ce papier et pouvant être mis sous tension sélectivement par ledit moyen de chauffage (4) pour produire des marques d'impression sur le papier, lesdits moyens de commande pouvant être mis en fonctionnement pour fournir de l'énergie électrique provenant dudit moyen de chauffage à différents groupes prédéterminés (3a à 3e) desdits éléments de chauffage (2) à différents temps prédéterminés au cours d'une opération d'impression, caractérisé en ce que les moyens de commande fournissent de l'énergie électrique à au moins l'un desdits groupes (3a à 3e) pour exécuter une impression de marques appartenant à une ligne ($\ell$) de parties de données de caractère à imprimer et fournissent simultanément de l'énergie électrique à au moins un autre desdits groupes (3a à 3e) pour exécuter une impression de marques appartenant à une dernière ligne précédente ($\ell$-1) des parties de données de caractère à imprimer.

7. Procédé selon la revendication 6, dans lequel l'imprimante est une imprimante telle que revendiquée dans l'une quelconque des revendications 2 à 5.

# Fig. 1

# Fig. 2

80 DOTS

1 DOT LINE, ℓ

320 DOTS

# Fig. 3

PRINT PERCENTAGE JUDGEMENT MEANS — 5

3a 3b 3c 3d 3e

1

2 — — 2

HEATING MEANS — 4

ELECTRIFICATION CONTROL MEANS — 6

PRINT BLOCK CONTROL MEANS — 12

EP 0 478 369 B1

# Fig. 4 (A)

U1 U2

U3 U4

# Fig. 4 (B)

U1 U2

U3 U4

# Fig. 5

$T(\alpha, \beta)$

$\alpha$: THE $\alpha$TH PULSE

$\beta$: THE PRINT BLOCK OF THE $\beta$TH GROUP

THE ASTERISK * MARK DENOTES THE
ELECTRIFICATION OF DOT LINE AT A
STEP AHEAD OF IT

EP 0 478 369 B1

# Fig. 6

# Fig. 8

# Fig. 9

19

# Fig. 7

320 DOTS

T ( α, β )

α : THE α TH PULSE

β : THE PRINT BOCK OF THE β TH GROUP

THE ASTERISK * MARK DENOTES THE ELECTRIFICATION OF DOT LINE AT A STEP AHEAD OF IT

# F I g. 10

# F l g. 11

PRINT DENSITY

PRINT PERIOD

# Fig. 12

| | HIGH SPEED PRINTING MODE | HIGH QUALITY PRINTING MODE |
|---|---|---|
| 1 | 7 5 % | 5 0 % |
| 2 | * * % | * * % |
| 3 | * * % | * * % |
| 4 | * * % | * * % |

PRINT SPEED

# F I g. 13

PRINT DATA INPUT MEANS — 14

C P U — 13

R O M — 15

12

11

M

+

8

7

3a 3b 3c 3d 3e 1 2 2 2

2

# Fig. 14

Fig. 15

Fig. 16 (A)

Fig. 16 (B)

Fig. 16 (C)  Fig. 16 (D)

1 ··· N ···
TMG
T(1N)
T(2N)
T(3N)

N BLOCKS

T(1,N)
T(2,N)
T(3,N)

OVERLAP OF
COLORING LINES

T(1,N)

T(2,N)

T(3,N)

Fig. 17(A)

PAPER FEED DIRECTION

1 DOT LINE = 320 DOTS

64 DOTS

3a 3b 3c 3d 3e

1-1 DOT LINE

1 DOT LINE

Fig. 17(B)

3a 3b 3c 3d 3e

GAP AREA

1-1 DOT LINE

1 DOT LINE

# Fig. 18 (A)

2-BURN SYSTEM

# Fig. 18 (B)

3-BURN SYSTEM

THE 1ST TIMING
THE 2ND TIMING
THE 3RD TIMING

# F I g. 19 (A)

BLOCK NUMBER

1   2   3   4   5

$t1$

# F I g. 19 (B)

BLOCK NUMBER

1   2   3   4   5

$t2$

t1 AND t2 : PRINT TIME OF 1 DOT LINE

# Fig. 20

ELECTRIFICATION TIMING

| | | | | |
|---|---|---|---|---|
| $G_0^0$ | $G_1^4$ | $G_2^3$ | $G_3^2$ | $G_4^1$ | T-1 |
| $G_0^1$ | $G_1^0$ | $G_2^4$ | $G_3^3$ | $G_4^2$ | T-2 |
| $G_0^2$ | $G_1^1$ | $G_2^0$ | $G_3^4$ | $G_4^3$ | T-3 |
| $G_0^3$ | $G_1^2$ | $G_2^1$ | $G_3^0$ | $G_4^4$ | T-4 |
| $G_0^4$ | $G_1^3$ | $G_2^2$ | $G_3^1$ | $G_4^0$ | T-5 |

GROUPING OF 1 DOT LINE

# Fig. 21

ELECTRIFICATION TIMING

| | | | | |
|---|---|---|---|---|
| $G_0^0$ | 0 | 0 | 0 | $G_4^1$ | T-1 |
| $G_0^1$ | $G_1^0$ | 0 | 0 | 0 | T-2 |
| 0 | $G_1^1$ | $G_2^0$ | 0 | 0 | T-3 |
| 0 | 0 | $G_2^1$ | $G_3^0$ | 0 | T-4 |
| 0 | 0 | 0 | $G_3^1$ | $G_4^0$ | T-5 |

GROUPING OF 1 DOT LINE

31

# Fig. 22

ELECTRIFICATION TIMING →

| | | | | | |
|---|---|---|---|---|---|
| ${}^{0}G_0^{0}$ | ${}^{0}G_1^{4}$ | ${}^{0}G_2^{3}$ | ${}^{0}G_3^{2}$ | ${}^{0}G_4^{1}$ | T−11 |
| ${}^{1}G_0^{0}$ | ${}^{1}G_1^{4}$ | ${}^{1}G_2^{3}$ | ${}^{1}G_3^{2}$ | ${}^{1}G_4^{1}$ | T−12 |
| ${}^{0}G_0^{1}$ | ${}^{0}G_1^{0}$ | ${}^{0}G_2^{4}$ | ${}^{0}G_3^{3}$ | ${}^{0}G_4^{2}$ | T−21 |
| ${}^{1}G_0^{1}$ | ${}^{1}G_1^{0}$ | ${}^{1}G_2^{4}$ | ${}^{1}G_3^{3}$ | ${}^{1}G_4^{2}$ | T−22 |
| ${}^{0}G_0^{2}$ | ${}^{0}G_1^{1}$ | ${}^{0}G_2^{0}$ | ${}^{0}G_3^{4}$ | ${}^{0}G_4^{3}$ | T−31 |
| ${}^{1}G_0^{2}$ | ${}^{1}G_1^{1}$ | ${}^{1}G_2^{0}$ | ${}^{1}G_3^{4}$ | ${}^{1}G_4^{3}$ | T−32 |
| ${}^{0}G_0^{3}$ | ${}^{0}G_1^{2}$ | ${}^{0}G_2^{1}$ | ${}^{0}G_3^{0}$ | ${}^{0}G_4^{4}$ | T−41 |
| ${}^{1}G_0^{3}$ | ${}^{1}G_1^{2}$ | ${}^{1}G_2^{1}$ | ${}^{1}G_3^{0}$ | ${}^{1}G_4^{4}$ | T−42 |
| ${}^{0}G_0^{4}$ | ${}^{0}G_1^{3}$ | ${}^{0}G_2^{2}$ | ${}^{0}G_3^{1}$ | ${}^{0}G_4^{0}$ | T−51 |
| ${}^{1}G_0^{4}$ | ${}^{1}G_1^{3}$ | ${}^{1}G_2^{2}$ | ${}^{1}G_3^{1}$ | ${}^{1}G_4^{0}$ | T−52 |

← GROUPING OF 2−DOT LINE →

# Fig. 23(A)

Fig. 23

| Fig. 23A | Fig. 23B |

```
┌─────────────┐      ┌──────────────────┐
│ PRINT DATA  │─────▷│ RECEPTION MEANS  │
│ INPUT MEANS │      └──────────────────┘
└─────────────┘               │
                              ▼
                    ┌──────────────────┐
                    │ RECEPTION BUFFER │
                    └──────────────────┘
                              │
                              ▼
                    ╱ CONTROL CODE      ╲
                    ╲ JUDGEMENT MEANS   ╱
                       │            │
                       ▼            ▼
            ┌──────────────┐  ┌──────────────┐
            │ QUALIFIED DATA│  │ PRINT DATA   │
            │ CONTROL MEANS │  │ CONTROL MEANS│
            └──────────────┘  └──────────────┘
                       │
                       ▼
                ┌──────────────┐
                │ CODE BUFFER  │
                └──────────────┘
                       │
                       ▼
                ╱ QUALIFIED DATA  ╲
                ╲ JUDGEMENT MEANS ╱
```

22-1

TASK #1

31 — PRINT DATA READ MEANS

32 — CG FONT DATA RETRIEVAL MEANS

PRINT DATA CONVERSION MEANS BY THE QUALIFIED DATA RETRIEVAL

TASK #2   TASK #3      TASK #N

22-2
      22-3         22-N

# Fig. 23(B)

IMAGE BUFFER

IS THE PRINT PERCENTAGE > OR = THE STIPULATED VALUE

DATA FRACTIONIZATION MEANS

ELECTRIFICATION TIME BY THE CONTROL MEANS

HEAD DATA TRANSFER MEANS

LATCH CONTROL SIGNAL

SERIAL DATA TRANSFER SIGNAL

JUDGEMENT OF THE KIND OF PAPER, PRINT SPEED, VOLTAGE, TEMPERATURE, ETC

101
102
103
10n
201
202
203
20n
2
7
2
300
8
2

FF
LATCH

ELECTRIFICATION TIME CONTROL MEANS

HEATING MEANS

PAPER FEED CONTROL MEANS

MOTOR CONTROL ~11